(19) Europäisches Patentamt
European Patent Office
Office européen des brevets

(11) **EP 2 325 656 B1**

(12) **EUROPEAN PATENT SPECIFICATION**

(45) Date of publication and mention
of the grant of the patent:
**09.08.2017 Bulletin 2017/32**

(51) Int Cl.:
**G01P 15/03** (2006.01)          **B60L 5/26** (2006.01)
**G01B 11/00** (2006.01)          **B60M 1/28** (2006.01)

(21) Application number: **09814540.2**

(22) Date of filing: **11.09.2009**

(86) International application number:
**PCT/JP2009/065950**

(87) International publication number:
**WO 2010/032695 (25.03.2010 Gazette 2010/12)**

(54) **DEVICE AND METHOD FOR MEASURING VERTICAL ACCELERATION OF PANTOGRAPH BY IMAGE PROCESSING**

VORRICHTUNG UND VERFAHREN ZUM MESSEN DER VERTIKALEN BESCHLEUNIGUNG EINES STROMABNEHMERS DURCH BILDVERARBEITUNG

DISPOSITIF ET PROCÉDÉ DE MESURE D'ACCÉLÉRATION VERTICALE DE PANTOGRAPHE PAR TRAITEMENT D'IMAGE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.09.2008 JP 2008237357**

(43) Date of publication of application:
**25.05.2011 Bulletin 2011/21**

(73) Proprietor: **Meidensha Corporation**
**Tokyo 141-6029 (JP)**

(72) Inventors:
• **NIWAKAWA, Makoto**
**Tokyo 141-6029 (JP)**
• **FUJIWARA, Nobuyuki**
**Tokyo 141-6029 (JP)**
• **HORI, Takamasa**
**Tokyo 141-6029 (JP)**

(74) Representative: **Strehl Schübel-Hopf & Partner**
**Maximilianstrasse 54**
**80538 München (DE)**

(56) References cited:
FR-A1- 2 882 973          FR-A1- 2 883 962
JP-A- 11 194 059          JP-A- 2002 279 409
JP-A- 2003 156 397        JP-A- 2003 341 389
JP-A- 2006 250 774

• **ATSUSHI IWAINAKA ET AL.: 'Pantograph Sesshokuryoku Sokutei System no Kaihatsu to Data no Katsuyo' JR EAST TECHNICAL REVIEW no. 10, March 2005, pages 068 - 072, XP008142876**

## Description

## Field of the Invention

The present invention relates to a device for measuring vertical acceleration of a pantograph by image processing and a method thereof, particularly to a device for measuring vertical acceleration of a pantograph at a driving point by processing an image photographed by a line sensor camera based on vertical acceleration of the pantograph at a measuring point (hereinafter, it is referred as "vertical acceleration") wherein a line sensor camera mounted on a vehicle body photographs images of moving the pantograph and photographed images are processed and a method thereof.

## Background of the Invention

In the case that a trolled wire stretched at the ground level is bent toward respect to a pantograph mounted on a roof of a vehicle body for an electric railway due to thermal expansion of the trolled wire and window pressure, the pantograph mounted on the roof of a vehicle body for an electric railway is lowered to a height level lower than a previously set height level by contacting with the trolled wire. As the result, the trolled wire and the pantograph are separated each other. Such a separation between the trolled wire and the pantograph causes the trolled wire abnormally worn away. Therefore, it is necessary to stretch a trolled wire and maintain the vertical acceleration at a constant amount in order to extend a lifespan of the trolled wire.

In a conventional method for measuring vertical acceleration of such a pantograph, one vertical acceleration measuring method for computing vertical acceleration detected by a plurality of acceleration sensor mounted on the pantograph (for example, disclosed in Non-Patent Document 1 and Patent Document 1 as mentioned below) and another vertical acceleration measuring method for processing an image of the pantograph vertically moved recorded by a line sensor camera mounted on a roof of a train body (for example, disclosed in Patent Documents 2 and 3 mentioned below) have been known. Another such method has been disclosed in Patent Document 4.

## Prior Art

## Patent Documents

Patent Document 1: Japanese Patent Unexamined Publication No. 2003-156397
Patent Document 2: Japanese Patent Unexamined Publication No. 2006-250774
Patent Document 3: Japanese Patent Unexamined Publication No. 2003-341389

Patent Document 4: Japanese Patent Unexamined Publication No. 2002-279409

## Non-Patent Document

Non-Patent Document 1: " Development of Pantograph Contact-Measurement System and Utility of Data Thereof" written by Iwainaka, Sato and Izuno (JR EAST Technical Review-No. 10, p68-72)

## Summary of the Invention

## Subject to be Solved by the Invention

In the above method detected by acceleration sensors, extreme high voltage of 2.5kV is flown through the pantograph on which acceleration sensors are amounted. Therefore, an output of the acceleration sensors cannot be directly taken into an inside of a train body. The output of the acceleration sensors is transmitted by a telemeter or an optical cable. In the case for transmitting the output with the telemeter, it is necessary to exchange an electric battery after passing an appropriate time period. In the case for transmitting the output through the optical cable, there are problems in view of a drift phenomenon of the output due to some instability and thermal conditions.

In the method with the line sensor camera, it is advantage to measure the vertical movement of the pantograph in a non-contact style. The line sensor camera is provided at one point separated from a contacting point between the pantograph and a trolled wire (driving point) so that an accuracy degree cannot be so improved. In order to improve the accuracy degree, a plurality of line sensor cameras may be provided. However, a size of a measurement instrument becomes large, if to do so.

In order to resolve the above drawbacks, a purpose of the present invention is to provide a compact device for measuring vertical acceleration of a pantograph by processing an image wherein the compact device is capable of measuring the vertical acceleration of the pantograph with high accuracy and a method thereof.

## Means to solve the Subject

To resolve the above drawbacks, the pantograph vertical acceleration measurement device as defined in Claim 1 is suggested.

In the pantograph vertical acceleration measurement device, the line sensor camera may be mounted on a camera platform and a photographing direction of the line sensor camera may be adjustable.

A pantograph vertical measurement method by image processing according to the invention is suggested in independent method claim 3.

## Effect of the Invention

Although it is a compact device, the device of the invention can measure a pantograph with a non-contact method and store measured data. On the other hand, the device can compute vertical acceleration of the pantograph at a contact point with the pantograph and the trolley wire with high accuracy.

Further, a calculation of the transmitting function and a measurement of the vertical acceleration of the pantograph at a point for contacting with the pantograph and the trolled wire are processed by one device so that a convenient efficiency of the device is improved.

If the line sensor camera is mounted on a camera platform and a photographing direction of the line sensor camera is adjustable, a possibility that a pantograph is detected wrongly can be reduced.

If the method of the invention is operated in a compact device, the device can measure a pantograph with a non-contact method and store measured data. On the other hand, the method can compute vertical acceleration of the pantograph at a contact point with the pantograph and the trolley wire with high accuracy.

Further, a step for calculating the transmitting function and a step for measuring the vertical acceleration of the pantograph at a point for contacting with the pantograph and the trolled wire are processed by one device so that a convenient efficiency of the method is improved.

## Brief Description of the Drawings

Fig. 1 shows an outline structure of a first embodiment of a device for measuring vertical acceleration of a pantograph by processing an image according to the present invention.

Fig. 2 is a block diagram for showing components in an image processing portion of the first embodiment of the device for measuring vertical acceleration of a pantograph according to the present invention.

Fig. 3 is a flowchart for showing a process of the image processing portion of the first embodiment according to the present invention.

Fig. 4 shows a sample of a line sensor picture obtained by a line sensor camera of the first embodiment according to the present invention.

Fig. 5 shows an example of a pattern matching model of the first embodiment according to the present invention.

Fig. 6 shows an outline structure of a second embodiment of a device for measuring vertical acceleration of a pantograph by processing an image according to the present invention.

## Embodiment to practice the Invention

The embodiments of the present invention will be described as described below. pantograph at a contact point with the pantograph and the trolley wire with high accuracy.

According to the pantograph vertical acceleration measurement device by processing an image of a pantograph of the second invention, the pantograph vertical acceleration measurement device is characterized in that the image processing portion comprises transmitting function computing means for computing the transmitting function in accordance with vertical acceleration of the pantograph detected from a position of the pantograph in the line sensor image at a moment when vertical vibration force is vertically applied to the pantograph at one or more than vibrating points and vertical acceleration of the pantograph at the vibrating points. As the result, a calculation of the transmitting function and a measurement of the vertical acceleration of the pantograph at a point for contacting with the pantograph and the trolled wire are processed by one device of the second invention so that a convenient efficiency of the device is improved.

According to the pantograph vertical acceleration measurement device by processing the image of the third invention, the pantograph vertical acceleration measurement device is characterized in that the line sensor camera is mounted on a camera platform and a photographing direction of the line sensor camera is adjustable. As the result, a possibility that a pantograph is detected wrongly can be reduced.

A pantograph vertical measurement method by processing image of the fourth invention is a pantograph vertical acceleration measurement method by processing an image of a pantograph photographed by a line sensor camera mounted on a vehicle body in an image processing portion, wherein the pantograph vertical measurement method is characterized in that the image processing portion comprises a step for inputting image data from the line sensor camera, a step for detecting a position of a pantograph at a measurement point in the line sensor image by comparing with the line sensor image formed by the input image data and pattern matching model previously stored and a step for computing vertical acceleration of the pantograph at a point for contacting with the trolled wire in accordance with the vertical acceleration detected from the position of the pantograph in the line sensor image and one or more than transmitting functions previously detected. As the result, even if the method is operation by a compact device, the device can measure a pantograph with a non contact method and store measured data. On the other hand, the method of the fourth invention can compute vertical acceleration of the pantograph at a contact point with the pantograph and the trolley wire with high accuracy.

According to the pantograph vertical acceleration measurement method according of the fifth invention, the pantograph vertical acceleration measurement method is characterized in that vertical vibration is applied to one or more than driving points on the pantograph simultaneously with photographing the pantograph at the measuring point so that the transmitting functions are computed based on the vertical acceleration of the pantograph at the driving point and vertical acceleration of the pantograph at the measuring point in the line sensor image formed by photographed images. As the result, a step for calculating the transmitting function and a step for measuring the vertical acceleration of the pantograph at a point for contacting with the pantograph and the trolled wire are processed by one device so that a convenient efficiency of the method is improved.

Brief Description of the Drawings

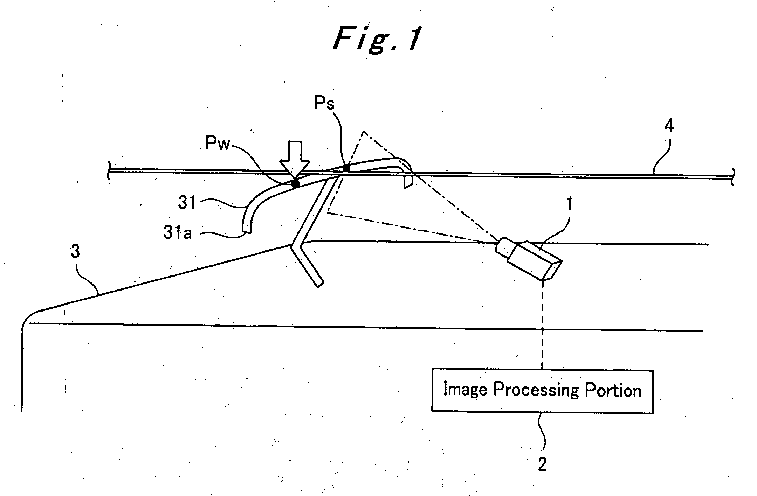

[Fig.1] Fig. 1 shows an outline structure of a first embodiment of a device for measuring vertical acceleration of a pantograph by processing an image according to the present invention.

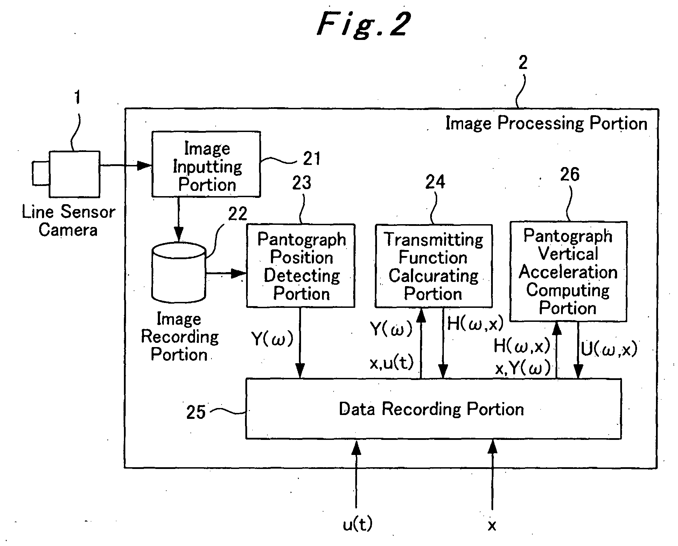

[Fig.2] Fig. 2 is a block diagram for showing components in an image processing portion of the first embodiment of the device for measuring vertical acceleration of a pantograph according to the present invention.

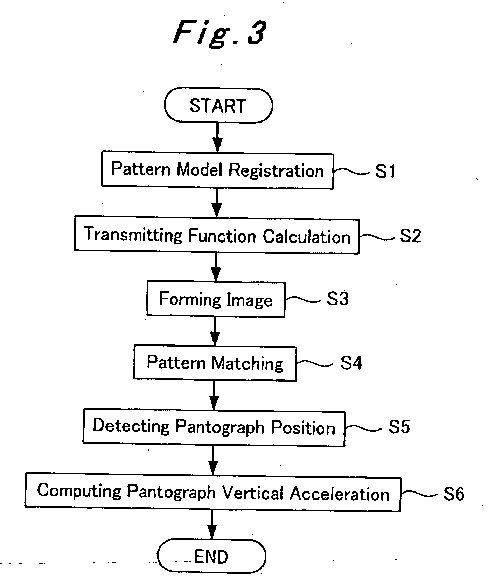

[Fig.3] Fig. 3 is a flowchart for showing a process of the image processing portion of the first embodiment according to the present invention.

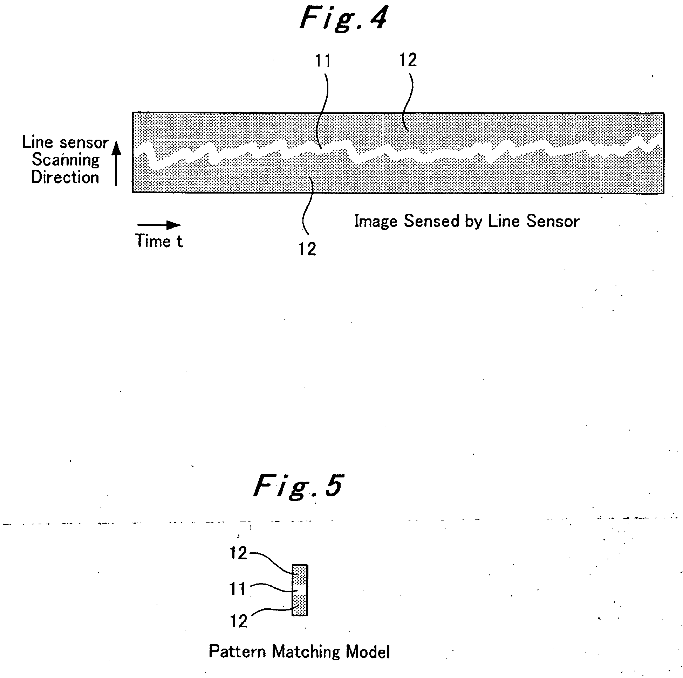

[Fig. 4] Fig. 4 shows a sample of a line sensor picture obtained by a line sensor camera of the first embodiment according to the present invention.
[Fig. 5] Fig. 5 shows an example of a pattern matching model of the first embodiment according to the present invention.

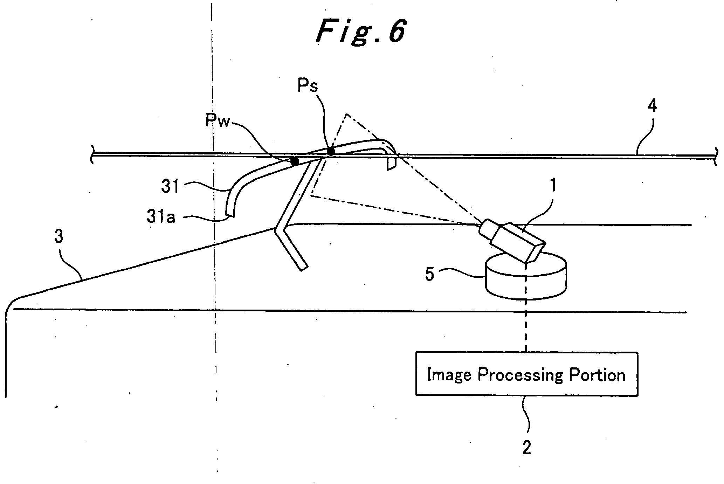

[Fig. 6] Fig. 6 shows an outline structure of a second embodiment of a device for measuring vertical acceleration of a pantograph by processing an image according to the present invention.

Embodiment to practice the Invention

The embodiments of the present invention will be described as described below.

Embodiment 1

With reference to Fig. 1 through Fig. 5, the first embodiment of the present invention will be described. Fig. 1 shows an outline structure of a first embodiment of a device for measuring vertical acceleration of a pantograph by processing an image according to the present invention. Fig. 2 is a block diagram for showing components in an image processing portion of the first embodiment of the device for measuring vertical acceleration of a pantograph according to the present invention. Fig. 3 is a flowchart for showing a process of the image processing portion of the first embodiment according to the present invention. Fig. 4 shows a sample of a line sensor picture obtained by a line sensor camera of the first embodiment according to the present invention. Fig. 5 shows an example of a pattern matching model of the first embodiment according to the present invention.

As shown in Fig. 1, the embodiment of the device for measuring vertical acceleration of a pantograph by processing an image comprises a line sensor camera 1 and an image processing portion 2.

A pantograph 31 is mounted on a roof of a train body 3 and the line sensor camera 1 is also mounted on the roof. The line sensor camera 1 is inclined with respect to the roof. Thereby, an optical axis of the line sensor camera has an angle of elevation so that the line sensor camera 1 can take an image of the pantograph located at a predetermined position as a measurement point Ps. A scanning direction of the line sensor camera 1 is arranged so as to be perpendicular to the pantograph 31. That is, the scanning direction is a vertical direction.

In the image processing portion 2 in the embodiment, a transmitting function and a vertical acceleration calculation are processed. As shown in Fig. 2, the image processing portion 2 comprises an image inputting portion 21, an image recording portion 22, a pantograph position detecting portion 23, a function calculating portion 24, a data recording portion 25 and a pantograph vertical acceleration computing portion 26.

As image inputting means, a picture inputting portion 21 is provided to input successively images recorded by the line sensor camera 1 at a predetermined time interval. An image recording portion 22 is provided to store image data input by the image inputting means 21. In the image recording portion 22, a pattern matching model is previously preserved for comparing the recorded images and the pattern matching model.

As pantograph position detecting means, a pantograph position detecting portion 23 is provided to judge a position of the pantograph 31 on a line sensor image in which a plurality of time series image data stored in the image recording portion 22 are juxtaposed in order (as shown in Fig. 4) and the line sensor image and the pattern matching model are compared so as to derive a locus 11 of the pantograph by distinguishing the locus 11 from a background 12 in the image.

As transmitting function calculation means, transmitting function calculating means 24 is provided to calculate a transmitting function $H(\omega, x)$ so as to determine actual vertical acceleration of the pantograph at the driving point Pw based on the vertical acceleration of the pantograph 31 at the measuring point Ps wherein an action of the locus 11 of the pantograph on the line sensor image at a moment when vertical vibration force is applied to the pantograph 31 at the driving point, a position of the driving point $(x = x_w)$ in the case that a position of the measuring point Ps taken an image by the line sensor camera 1 is $x = 0$ and vertical acceleration of the pantograph 31 at the driving point Pw are utilized.

A data recording portion 25 is provided to store vertical acceleration y (t) obtained by twice differentiating a position of the locus 11 of the pantograph on the line sensor image detected by the pantograph position detecting portion 23, the transmitting function H ($\omega$, x) calculated in the transmitting function calculating portion 24, the vertical acceleration u (t) of the pantograph 31 calculated by a pantograph vertical acceleration computing portion 26 as described below and so on.

As pantograph vertical acceleration calculation means, a pantograph vertical acceleration computing portion 26 is provided to store the vertical acceleration ($\omega$, x) at a contact point where the pantograph 31 contacts with a trolled wire 4 in accordance with the transmitting function H ($\omega$, x) calculated in the transmitting function calculating portion 23 and the deflection point x (= $x_w$) of the trolled wire 4 (driving point Pw).

Hereinafter, it will be described a process for detecting the vertical acceleration u (t) at the driving point Pw of the pantograph 31 processed by the image processing portion 2 of the vertical acceleration measuring device with respect to the pantograph with reference to the embodiment as shown in Fig. 3.

As shown in Fig. 3, in the image processing portion 2, a pattern matching model as shown in Fig. 5 is previously registered (step S1) at the first. In the next, a calculation of the transmitting function H ($\omega$, x) is processed (step S2).

The transmitting function H ($\omega$, x) is calculated along a process as described below. At the first, while the line sensor camera 1 records the predetermined position Ps of the pantograph 31 as the measuring point, vertical vibration is applied to the driving point Pw where is separated from the measuring point Ps with a distance $x_w$ and then vertical acceleration u (t) at the driving point Pw of the pantograph 31 is measured by an acceleration sensor (not shown).

The images recorded by the line sensor camera 1 are periodically input to the image input portion 21 of the image processing portion 2 with a predetermined time interval and stored in the image recording portion 22. Then, in the pantograph position detecting portion 23, the line sensor images output from the image recording portion 22 are compared to the pattern matching model previously registered so as to find the locus 11 of the pantograph on the line sensor images. Thus, a position of the pantograph in the line sensor image is detected.

In the next, in the transmitting function computing portion 24, the position of the pantograph 31 in the line sensor image detected by the pantograph position detecting portion 23 is twice differentiated so as to obtain vertical acceleration y (t). In accordance with the following equation (1), the transmitting function H ($\omega$, x) is calculated with the vertical acceleration u (t) at the driving point Pw of the pantograph 31 and the above vertical acceleration y (t).

$$H\ (\omega) = y\ (\omega)/U(\omega) \quad \cdots (1)$$

wherein y($\omega$) means vertical acceleration y(t) of the pantograph 31 on the line sensor image, H($\omega$) means the transmitting function h(t) and U($\omega$) means a Fourier transformation of the actual vertical acceleration u(t) of the pantograph.

Herein, the vertical acceleration y(t) at the measuring point Ps of the pantograph in the line sensor image at a moment when vertical vibration is applied to the driving point Pw, the transmitting function h(t) and the vertical acceleration u(t) of the pantograph 31 at the driving point Pw are indicated as the following equation (2).

[Equation 1]

$$Y(t) = \int h(t)u(t)dt \cdots (2)$$

In accordance with the above equation (2), the following equation (3) can be obtained.

$$Y(\omega) = H(\omega) \cdot U(\omega) \cdots (3)$$

In accordance with the above equation (3), the above equation (1) can be obtained.

A number of the transmitting functions H ($\omega$, x) is depending on a desirable vibration mode of the pantograph 31. In the case of detecting the first order mode, for example, a center point (x=x0) of the pantograph is designated as the driving point so as to detect one transmitting function H0 ($\omega$, x). In the case of detecting the second order mode, two points (left side and right side) of the pantograph 31 are designated as the driving points (x= x1, x2) so as to detect two transmitting functions H1 ($\omega$, x) and H2 ($\omega$, x). The detected transmitting function H ($\omega$, x) is stored in the date recording portion 25. Herein, as shown in Fig. 3 of the above Patent Document 1 and the description thereof, the first order mode is the vibration mode 3 (bending first order mode) and the second order mode is the vibration mode 4 (bending second order mode).

In the next, while the train is running, the measuring point P3 of the pantograph 31 is photographed by the line sensor camera 1 and the image input portion 21 input them at a predetermined time interval so as to store them in the image recording portion 22 (step S3).

In the next, in the pantograph position detecting portion 23, the line sensor image and the pattern matching model previously stored are output from the image recording portion 22. By comparing with the line sensor image and the pattern matching model, the locus 11 of the pantograph in the line sensor image is extracted (step S4) so as to detect a position of the pantograph 31 in the line sensor image (step S5).

Then, in the pantograph vertical acceleration computing portion 26, a deflection point of the trolled wire 4 (driving point Pw) is detected by a conventional method. By utilizing the transmitting function Hn ($\omega$, x) of the nearest point with respect to the deflection point and the vertical acceleration y (t) at the point Ps detected by a displacement of the pantograph 31 on the line sensor image, the following equation (4) is calculated.

$$U\ (\omega,x) = Y(\omega)/H(\omega,\ x) \cdot \cdot \cdot (4)$$

Thereby, the vertical acceleration u(t) at the deflection point of the trolled wire 4 (driving point Pw) is obtained (Step S6).

In accordance with the vertical acceleration measurement device of a pantograph by processing image according to the present embodiment and the method thereof, the acceleration at the driving point can be calculated by utilizing the transmitting function so that the vertical acceleration of the pantograph 31 at the deflection point of the trolled wire 4 (driving point Pw) can be calculated with high accuracy.

Although the transmitting function is calculated by detecting a position of the pantograph 31 on an image comparing with a pattern matching model in the present embodiment, the present invention may be applicable to the other methods for detecting a position of the pantograph in the image. For example, the present invention may be applied to a method disclosed in Japanese Patent Unexamined Publication No. 2006-250774. Although an image recording portion 22 is provided at the image processing portion 2 in the present embodiment as described above, it is also applicable to process the image photographed by the line sensor camera 1 immediately so as to detect a locus 11 of the pantograph and output the vertical acceleration of the pantograph at a real time. The various modifications are acceptable within an essence of the present invention.

Embodiment 2

The second embodiment of the present invention will be described with reference to Fig. 6. Fig. 6 shows an outline structure of a second embodiment of a device for measuring vertical acceleration of a pantograph by processing an image according to the present invention.

In the present embodiment as shown in Fig. 6, the line sensor camera 1 described in the first embodiment is provided on a camera platform 5. A central portion of the pantograph 31 is normally colored in black with iron powders because the central portion is slid on a trolled wire. If a measurement is operated in the night, it is difficult to find out the pantograph in a black background. Therefore, a wrong detection might be happened.

In the second embodiment, while an actual image is observed by the line sensor camera 1, a camera direction of the line camera sensor 1 mounted on the camera platform is adjusted so as to record a clear image of the pantograph 31 such as a horn 31a of the pantograph 31. A structure of the second embodiment is almost equal to the structure as shown in Fig. 1 and Fig. 3. Therefore, the same components corresponding to components described in the first embodiment are numbered with the same reference number in the first embodiment and the description thereof is omitted.

In accordance with the second embodiment of the pantograph vertical acceleration measurement device by processing images, a locus of the pantograph 31 is certainly detected so that the vertical acceleration of the pantograph 31 at the deflection position of the trolled wire 4 (driving point Pw) can be measured with high accuracy in addition to the effect obtained in the first embodiment.

Utility in Industry

The present invention is applicable to a pantograph vertical acceleration measurement device by processing image and a measurement method thereof.

**Claims**

1. A device for measuring vertical acceleration of a pantograph (31) by processing an image of the a pantograph, comprising

    a line sensor camera (1) adapted to be mounted on the roof of a vehicle body (3) and to photograph an image of the pantograph, and

    an image processing portion (2) adapted to be mounted inside the vehicle body and to determine the vertical acceleration of the pantograph by processing the image photographed by the line sensor camera,

    wherein said image processing portion comprises:

      image input means (21) for inputting an image of a pantograph photographed at a measuring point (Ps) by said line sensor camera;

      pantograph position detecting means (23) for detecting a position of said pantograph in said image recorded in said line sensor camera by processing said image; and

      pantograph acceleration computing means for computing vertical acceleration of said pantograph at a point (Pw) for contacting with a trolled wire (4) in accordance with a position of said pantograph in said line sensor image, one or more transmitting functions previously detected, and a deflection position of the trolled wire contacting with the pantograph;

      wherein the image processing portion comprises transmitting function computing means (24) for computing the one or more transmitting functions in accordance with vertical acceleration of the pantograph detected from a position of the pantograph in the line sensor image at a moment when vertical vibration force is vertically applied to the pantograph at one or more vibrating points, and vertical acceleration of the pantograph at the vibrating points.

2. The device of claim 1, wherein the line sensor camera (1) is mounted on a camera platform (5) and a photographing direction of said line sensor camera is adjustable.

3. A pantograph vertical acceleration measurement method by processing an image of a pantograph photographed by a line sensor camera mounted on the roof of a vehicle body in an image processing portion,
said pantograph vertical measurement method comprising the following steps in the image processing portion:

inputting image data from said line sensor camera;
detecting a position of a pantograph at a measurement point in the line sensor image by comparing with said line sensor image formed by said input image data and pattern matching model previously stored;
computing vertical acceleration of said pantograph at a point for contacting with the trolled wire in accordance with the vertical acceleration detected from said position of the pantograph in the line sensor image, one or more transmitting functions previously detected, and a deflection position of the trolled wire contacting with the pantograph;
wherein vertical vibration is applied to one or more driving points on said pantograph simultaneously with photographing the pantograph at the measuring point so that the one or more transmitting functions are computed based on the vertical acceleration of the pantograph at the driving point and vertical acceleration of the pantograph at the measuring point in the line sensor image formed by the photographed images.

**Patentansprüche**

1. Vorrichtung zum Messen der vertikalen Beschleunigung eines Stromabnehmers (31) durch Verarbeiten eines Bildes des Stromabnehmers, umfassend
eine Liniensensorkamera (1), die dazu ausgelegt ist, auf dem Dach eines Wagenkörpers (3) angebracht zu sein und ein Bild des Stromabnehmers zu fotografieren, und
ein Bildverarbeitungsabschnitt (2), der dazu ausgelegt ist, innerhalb des Wagenkörpers angebracht zu sein und die vertikale Beschleunigung des Stromabnehmers durch Verarbeiten des von der Liniensensorkamera fotografierten Bildes zu bestimmen,
wobei der Bildverarbeitungsabschnitt umfasst:

eine Bildeingabeeinrichtung (21) zum Eingeben eines Bildes eines von der Liniensensorkamera an einem Messpunkt (Ps) fotografierten Stromabnehmers;
eine Stromabnehmerposition-Detektionseinrichtung (23) zum Detektieren einer Position des Stromabnehmers in dem von der Liniensensorkamera aufgezeichneten Bild durch Verarbeiten des Bildes; und
eine Stromabnehmerbeschleunigung-Berechnungseinrichtung zum Berechnen der vertikalen Beschleunigung des Stromabnehmers an einem Punkt (Pw) zum Kontakt mit einer Hängeleitung (4) gemäß einer Position des Stromabnehmers im Liniensensorbild, einer oder mehrerer zuvor detektierten Übertragungsfunktionen und einer Ablenkungsposition der mit dem Stromabnehmer in Kontakt stehenden Hängeleitung;
wobei der Bildverarbeitungsabschnitt eine Übertragungsfunktion-Berechnungseinrichtung (24) zum Berechnen der einen oder der mehreren Übertragungsfunktionen gemäß der vertikalen Beschleunigung des Stromabnehmers, die aus einer Position des Stromabnehmers im Liniensensorbild zu einem Zeitpunkt, wenn vertikale Vibrationskraft an einem oder mehreren Vibrationspunkten auf den Stromabnehmer vertikal angewendet wird, detektiert worden ist, und der vertikalen Beschleunigung des Stromabnehmers an den Vibrationspunkten.

2. Vorrichtung nach Anspruch 1, wobei die Liniensensorkamera (1) auf einer Kameraplattform (5) angebracht ist und eine Fotografierrichtung der Liniensensorkamera justierbar ist.

3. Verfahren zum Messen der vertikalen Beschleunigung eines Stromabnehmers durch Verarbeiten eines Bildes eines Stromabnehmers, das von einer auf dem Dach eines Wagenkörpers angebrachten Liniensensorkamera fotografiert worden ist, in einem Bildverarbeitungsabschnitt,
wobei das Verfahren zum Messen der vertikalen Beschleunigung des Stromabnehmers die folgenden Schritte im Bildverarbeitungsabschnitt beinhaltet:

Eingeben von Bilddaten aus der Liniensensorkamera;

Detektieren einer Position eines Stromabnehmers an einem Messpunkt im Liniensensorbild durch Vergleichen mit dem von den Eingabebilddaten gebildeten Liniensensorbild und einem zuvor gespeicherten Mustererkennungsmodell;

Berechnen der vertikalen Beschleunigung des Stromabnehmers an einem Punkt zum Kontakt mit der Hängeleitung gemäß der aus der Position des Stromabnehmers im Liniensensorbild detektierten vertikalen Beschleunigung, einer oder mehrerer zuvor detektierter Übertragungsfunktionen und einer Ablenkungsposition der mit dem Stromabnehmer in Kontakt stehenden Hängeleitung;

wobei gleichzeitig zum Fotografieren des Stromabnehmers am Messpunkt vertikale Vibration auf einen oder mehrere Antriebspunkte auf dem Stromabnehmer angewendet wird, sodass die eine oder die mehreren Übertragungsfunktionen auf der Grundlage der vertikalen Beschleunigung des Stromabnehmers am Antriebspunkt und der vertikalen Beschleunigung des Stromabnehmers am Messpunkt in dem von den fotografierten Bildern gebildeten Liniensensorbild berechnet werden.

**Revendications**

1. Dispositif de mesure de l'accélération verticale d'un pantographe (31) en traitant une image du pantographe, comprenant

   un appareil photo à capteur linéaire (1) adapté pour être monté sur le toit d'une carrosserie de véhicule (3) et pour photographier une image du pantographe, et

   une partie de traitement d'image (2) adaptée pour être montée à l'intérieur de la carrosserie de véhicule et pour déterminer l'accélération verticale du pantographe en traitant l'image photographiée par l'appareil photo à capteur linéaire,

   dans lequel ladite partie de traitement d'image comprend :

   un moyen d'entrée d'image (21) destiné à fournir une image d'un pantographe photographiée à un point de mesure (Ps) par ledit appareil photo à capteur linéaire ;
   un moyen de détection de position de pantographe (23) destiné à détecter une position dudit pantographe sur ladite image enregistrée dans ledit appareil photo à capteur linéaire en traitant ladite image ; et
   un moyen de calcul d'accélération de pantographe destiné à calculer une accélération verticale dudit pantographe à un point (Pw) afin d'entrer en contact avec un fil en traînée (4) selon une position dudit pantographe sur ladite image de capteur linéaire, une ou plusieurs fonction(s) de transmission préalablement détectée(s), et une position de déviation du fil en traînée en contact avec le pantographe ;
   dans lequel la partie de traitement d'image comprend un moyen de calcul de fonction de transmission (24) destiné à calculer la ou les fonction(s) de transmission selon l'accélération verticale du pantographe détectée à partir d'une position du pantographe sur l'image de capteur linéaire à un moment auquel une force vibratoire verticale est appliquée au pantographe au niveau d'un ou plusieurs point(s) de vibration, et l'accélération verticale du pantographe au niveau des points de vibration.

2. Dispositif selon la revendication 1, dans lequel l'appareil photo à capteur linéaire (1) est monté sur une plate-forme d'appareil photo (5) et une direction de photographie dudit appareil photo à capteur linéaire est réglable.

3. Procédé de mesure d'accélération verticale de pantographe en traitant une image d'un pantographe photographiée par un appareil photo à capteur linéaire monté sur le toit d'une carrosserie de véhicule dans une partie de traitement d'image,

   ledit procédé de mesure d'accélération verticale de pantographe comprenant les étapes suivantes dans la partie de traitement d'image :

   la fourniture de données d'image par ledit appareil photo à capteur linéaire ;
   la détection d'une position d'un pantographe au niveau d'un point de mesure sur l'image de capteur linéaire par comparaison avec ladite image de capteur linéaire formée par lesdites données d'image d'entrée et un modèle de comparaison de motifs préalablement stocké ;
   le calcul de l'accélération verticale dudit pantographe à un point de contact avec le fil en traînée selon l'accélération verticale détectée à partir de ladite position du pantographe sur l'image de capteur linéaire, une ou plusieurs fonction(s) de transmission préalablement déterminée(s), et une position de déviation du fil en traînée en contact avec le pantographe ;
   dans lequel une vibration verticale est appliquée à un ou plusieurs point(s) d'excitation sur ledit pantographe en même temps que la photographie du pantographe au niveau du point de mesure de sorte que la ou les fonction(s) de transmission soit/soient calculée(s) sur la base de l'accélération verticale du pantographe au niveau du point d'excitation et de l'accélération verticale du pantographe au niveau du point de mesure sur l'image de capteur linéaire formée par les images photographiées.

## Fig.1

Ps

Pw

4

31

31a

3

1

Image Processing Portion

2

EP 2 325 656 B1

# Fig.2

Line Sensor Camera — 1

Image Processing Portion — 2

Image Inputting Portion — 21

Image Recording Portion — 22

Pantograph Position Detecting Portion — 23

$Y(\omega)$

Transmitting Function Calcurating Portion — 24

$Y(\omega)$

$x,u(t)$

$H(\omega,x)$

Pantograph Vertical Acceleration Computing Portion — 26

$H(\omega,x)$

$x,Y(\omega)$

$U(\omega,x)$

Data Recording Portion — 25

$u(t)$

$x$

# Fig.3

START

Pattern Model Registration ~ S1

Transmitting Function Calculation ~ S2

Forming Image ~ S3

Pattern Matching ~ S4

Detecting Pantograph Position ~ S5

Computing Pantograph Vertical Acceleration ~ S6

END

## *Fig.4*

11    12

Line sensor
Scanning
Direction

Time t

12

12

Image Sensed by Line Sensor

## *Fig.5*

12

11

12

Pattern Matching Model

# Fig.6

**EP 2 325 656 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003156397 A
- JP 2006250774 A
- JP 2003341389 A
- JP 2002279409 A

**Non-patent literature cited in the description**

- **IWAINAKA ; SATO ; IZUNO.** Development of Pantograph Contact-Measurement System and Utility of Data Thereof. *JR EAST Technical Review,* vol. 10, 68-72